# EUROPEAN PATENT APPLICATION

(11) **EP 2 439 933 A1**
(43) Date of publication of application: **11.04.2012**
(21) Application number: 09845964.7
(22) Date of filing: 19.06.2009
(51) Int. Cl.: H04N 5/445

(54) **MENU GENERATION METHOD FOR TELEVISION**

(71) Applicant: Shenzhen TCL New Technology Co., LTD, Nanshan District Shenzhen Guangdong 518067 (CN)
(72) Inventor: FU, Yaoyuan, Guangdong 518067 (CN); NING, Shangguo, Guangdong 518067 (CN); HE, Zhijun, Guangdong 518067 (CN)
(74) Representative: Manitz, Finsterwald & Partner GbR
(86) International application number: PCT/CN2009/000674
(87) International publication number: WO 2010/145050

(57) **Abstract**

A menu generating method for a TV set is provided in the present invention. The menu generating method includes the following steps of: step a: reading menu item data by a system; and step b: determining a classification to which the menu item belongs, wherein if the menu item belongs to a first classification, then the menu item is longitudinally filled into a menu frame, and if the menu item belongs to a second classification, then the menu item is laterally filled into the menu frame according to a menu of the first classification to which the menu belongs. With the menu generating method for a TV set according to the present invention, menus can be displayed automatically according to properties of the menus. This allows the menus to be displayed in a very simple and clear way, which makes it convenient for the user to operate the menus.

## Description

### BACKGROUND

### 1. Technical Field

The present invention relates to the field of television (TV), and more particularly, to a menu generating method for a TV set.

### 2. Description of Related Art

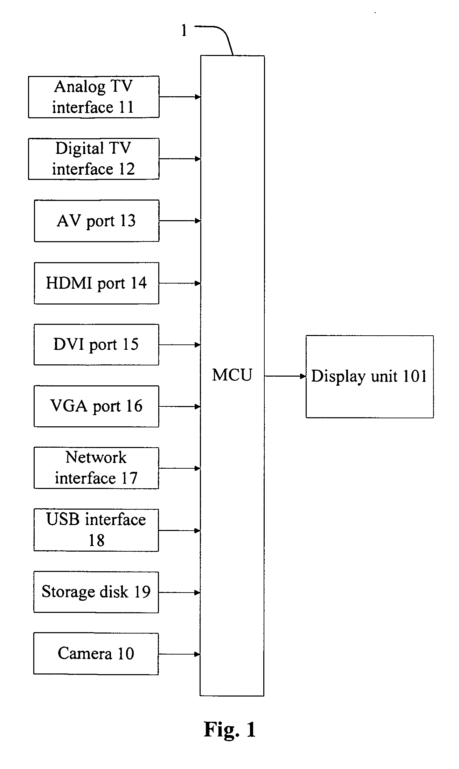

With continuous development of TV technologies, the role of TV sets as a home multimedia center becomes more and more prominent, and now a lot of functions can be supported by TV sets. Fig. 1 is a schematic view of a prior art TV set having a number of functional modules integrated therein. An input section of the TV set comprises: an analog TV interface 11 for receiving conventional analog TV programs; a digital TV interface 12 for receiving digital TV programs; an AV port 13 for receiving analog composite video signals (similar ports also include an S terminal, a YUV port, a YPbPr port or the like); a high-definition digital multimedia interface (HDMI) port 14 and a digital visual interface (DVI) port 15connected to external devices; a VGA port 16 for receiving analog video signals from computer; a network interface 17 for connection with a network so as to achieve the functions of IPTV as well as network downloading and surfing; a USB interface 18 for interacting with an external device (e.g., a USB flash drive, an MP3 player or the like); a storage disk 19 for recording TV programs, storing programs downloaded from networks and so on; a camera 10 for taking pictures of activities (e.g., a family party) of family members; and a microprocessing unit (MCU) 1 for controlling, receiving and processing signals transmitted from the aforesaid external interfaces and for outputting the processed signals to a display unit 101.

According to the above descriptions, the TV set has become a multimedia center among home appliances and is commonly used. As the number of menu items gets ever larger, the conventional way in which menus are arranged is very complex and makes it difficult to operate the menus by users. Therefore, there is a need to arrange menus in a reasonable way so as to facilitate operation by the users.

### BRIEF SUMMARY

An objective of the present invention is to provide a menu generating method for a TV set, which is intended to overcome the technical problem with the prior art that arrangement of TV menus is complex and makes it difficult to operate the menus by users.

A menu generating method for a TV set according to the present invention includes the following steps of:
step a: reading menu item data by a system; and
step b: determining a classification to which the menu item belongs, wherein if the menu item belongs to a first classification, then the menu item is longitudinally filled into a menu frame, and if the menu item belongs to a second classification, then the menu item is laterally filled into the menu frame according to a menu of the first classification to which the menu belongs.

Preferably, the menu item data includes a classification of the menu item, a position and a size of the menu item on a screen, and a subordination relationship of the menu item.

Preferably, the menu item data further includes a picture corresponding to the menu item and a corresponding picture displayed when the menu item is selected.

Preferably, the menu item data further includes a function corresponding to the menu item.

Preferably, in the step b, the TV set system reads the menu item data and applies the menu item data to a frame structure of the menu.

Preferably, in the step b, when the number of corresponding menu items is greater than the number of menu items that can be supported by the frame, then all longitudinal menu items are deleted and remaining menu items are used to fill the longitudinal frame structure if the menu item belongs to the first classification, and all lateral menu items at a same position are deleted and remaining menu items are used to fill the lateral frame structure if the menu item belongs to the second classification.

Preferably, in the step b, a position of the current menu item among menu items of the same classification is indicated by means of an arrow.

With the menu generating method for a TV set according to the present invention, menus can be displayed automatically according to properties of the menus. This allows the menus to be displayed in a very simple and clear way, which makes it convenient for the user to operate the menus.

### BRIEF DESCRIPTION OF THE DRAWINGS

Fig. 1 is a schematic view of a prior art TV set having a number of functional modules integrated therein;
Fig. 2 to Fig. 4 illustrate a typical expression of a menu system generated according to the present invention;
Fig. 5 is a flowchart diagram of a menu generating method for a TV set according to the present invention; and
Fig. 6 is a schematic view illustrating scrolling operations of a menu item according to the present invention.

Hereinafter, implementations, functional features and advantages of the present invention will be further described with reference to embodiments thereof and the attached drawings.

### DETAILED DESCRIPTION

To make the objectives, technical solutions and advantages of the present invention clearer, the present invention will be further described hereinbelow with reference to the attached drawings and embodiments thereof. It shall be understood that, the embodiments described herein are only intended to illustrate but not to limit the present invention.

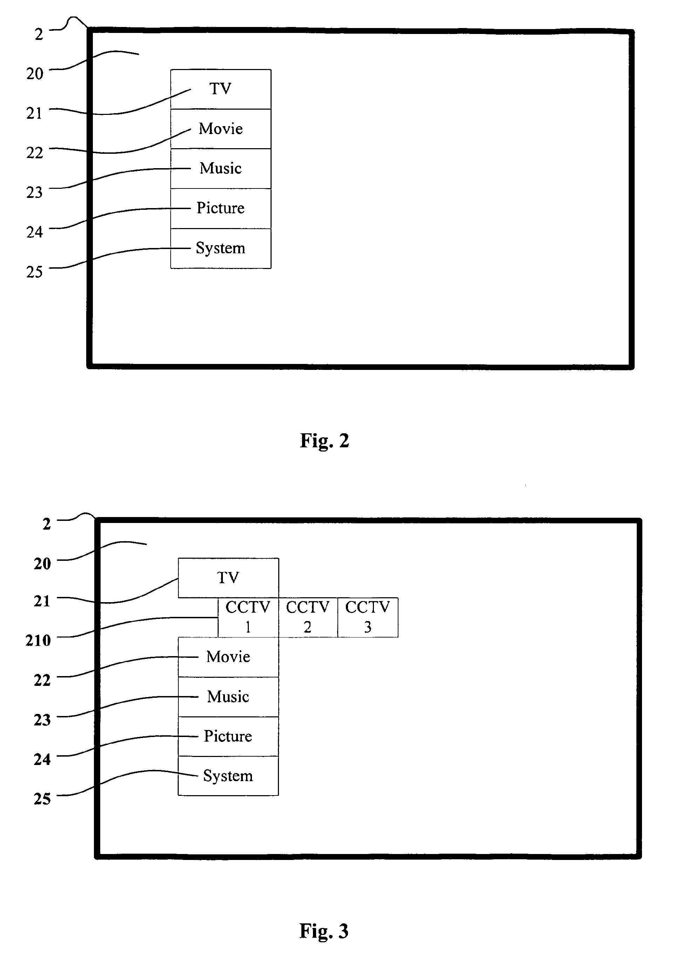

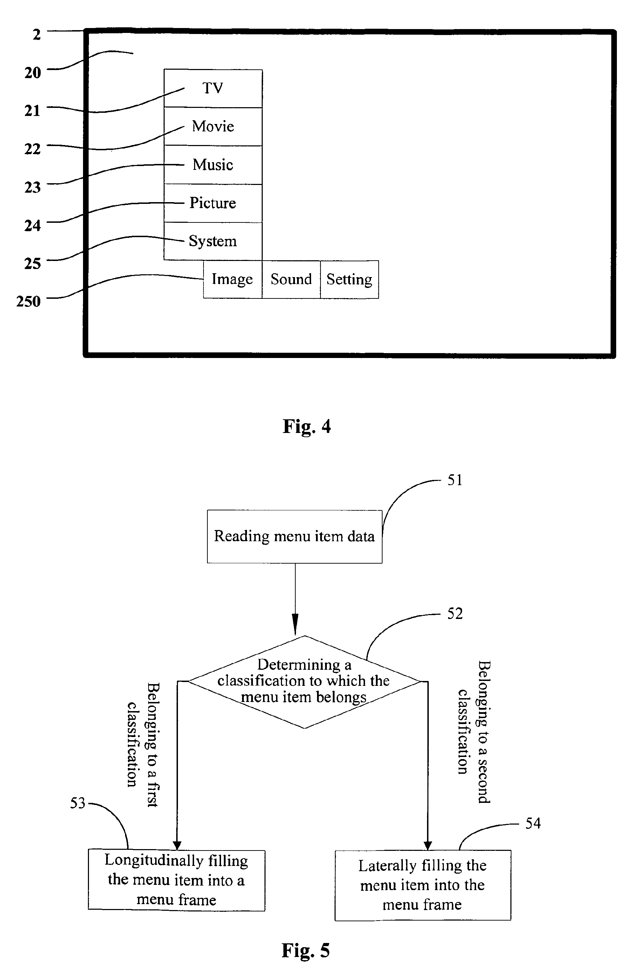

In order to display a menu better, a menu generating method for a TV set according to a preferred embodiment of the present invention is to laterally and longitudinally arrange menu items according to different classifications of the menu items so that arrangement of the menu items is clear and easy to be accepted and used by users. Referring to Fig. 2 to Fig. 4 together, a typical expression of a menu system generated according to the present invention is shown therein. As shown in Fig. 2, on a screen 20 of a TV set 2 are longitudinally displayed a column of menu items, which belong to a first classification. The first classification includes the following menu items: a TV menu item 21, a movie menu item 22, a music menu item 23, a picture menu item 24 and a system menu item 25. The TV menu item 21, the movie menu item 22, the music menu item 23 and the picture menu item 24 correspond to contents of the TV set, and the system menu item 25 corresponds to displaying settings of parameters of the TV set. As shown in Fig. 3, when the TV menu item 21 in the first classification is selected and pressed down, a second classification (i.e., a submenu 210 of the TV menu item 21, which corresponds to TV channels) is displayed laterally. Similarly, as shown in Fig. 4, when the system menu item 25 is selected and pressed down, a second classification (i.e., a submenu 250) is displayed laterally. The submenu 250 has system menu items such as a picture menu item, a sound menu item and a setting menu item, which correspond to displaying or setting functions of pictures, sounds or other parameters respectively.

To achieve the aforesaid menu frame, the system includes a frame structure of the menu. The frame structure includes the following data:
1. a position of the menu on the screen, wherein this data may be fixed or adjustable, and for purpose of simpleness herein, the positions of all the menus are fixed; and
2. the number of menu items comprised in the menu and the individual menu items, wherein each of the menu items has the following data structure:
   a) a position and a size of the menu item on the screen: this data may be fixed or adjustable, and in this embodiment, the positions of all the menu items are fixed;
   b) a classification of the menu item: taking the menu shown in Fig. 2 to Fig. 4 as an example, this menu has two classifications of menu items, i.e., the first classification of menu items and the second classification of menu items;
   c) a subordination relationship of the menu item: if the menu item belongs to the second classification, then it is needed to display the menu item of the first classification to which this menu item belongs, for example, the submenu 210 of the second classification shown in Fig. 3 belonging to the TV menu item 21 of the first classification;
   d) a picture corresponding to the menu item: this picture shall match with the size of the menu item; and this picture may also be displayed in character, for example, "TV", "movie", "music", "picture" and "system" shown in Fig. 2;
   e) a corresponding picture displayed when the menu item is selected: this picture shall match with the size of the menu item but differ from the picture of d), for example, the background color being changed when the TV menu item 21 shown in Fig. 3 is selected; and
   f) a function corresponding to the menu item: when the menu item is selected and confirmed by a user, the corresponding function can be performed.

The basic data structure of the menu item has been described above. Other data may also be comprised in actual applications, and will not be further described herein.

Referring to Fig. 5, a flowchart diagram of the menu generating method for a TV set according to the present invention is shown therein. The menu generating method for a TV set includes the following steps.

Firstly, step 51 is executed to read menu item data by a system; and then step 52 is executed to determine a classification to which the menu item belongs. If the menu item belongs to a first classification, then step 53 is executed to longitudinally fill the menu item into a menu frame. If the menu item belongs to a second classification, then step 54 is executed to laterally fill the menu item into the menu frame according to a menu of the first classification to which the second classification belongs.

It shall be emphasized that, after the aforesaid settings of the menu item are stored in the system, the system reads the data and applies the data to a frame structure of the menu when the system is to display the menu. When the number of corresponding menu items is greater than the number of menu items that can be supported by the frame, then all longitudinal menu items are deleted and remaining menu items are used to fill the longitudinal frame structure if the menu item belongs to the first classification, and all lateral menu items at a same position are deleted and remaining menu items are used to fill the lateral frame structure if the menu item belongs to the second classification. When the number of the menu items is smaller than the number of menu items that can be supported by the frame, then the menu items are filled sequentially from top to bottom and from left to right and the menu items that fail to be filled will not be displayed.

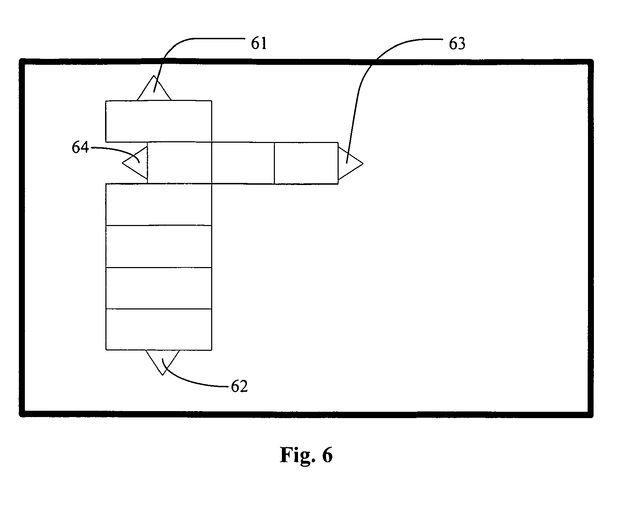

Referring to Fig. 6 together, a position of the current menu item among menu items of the same classification may also be indicated by means of arrows 61, 62, 63, 64 in the present invention. The arrows 63, 64 represent that the current lateral menu item is at a middle position and the corresponding menu item can be scrolled forwards or backwards so as to be selected. If the menu item is scrolled to a foremost position, then the arrow 63 is not displayed; and if the menu item is scrolled to a backmost position, then the arrow 64 is not displayed. Similarly, the arrows 61, 62 also have the aforesaid operations.

What described above are only preferred embodiments of the present invention but are not intended to limit the scope of the present invention. Accordingly, any equivalent structural or process flow modifications that are made on basis of the specification and the attached drawings or any direct or indirect applications in other technical fields shall also fall within the scope of the present invention.

## Claims

1. A menu generating method for a TV set, comprising the following steps of:
step a: reading menu item data by a TV system; and
step b: determining a classification to which the menu item belongs, wherein if the menu item belongs to a first classification, then the menu item is longitudinally filled into a menu frame, and if the menu item belongs to a second classification, then the menu item is laterally filled into the menu frame according to the first classification to which the menu belongs.

2. The menu generating method for a TV set of Claim 1, wherein the menu item data comprises a classification of the menu item, a position and a size of the menu item on a screen, and a subordination relationship of the menu item.

3. The menu generating method for a TV set of Claim 2, wherein the menu item data further comprises a picture corresponding to the menu item and a corresponding picture displayed when the menu item is selected.

4. The menu generating method for a TV set of Claim 2, wherein the menu item data further comprises a function corresponding to the menu item.

5. The menu generating method for a TV set of Claim 1, wherein in the step b, the TV set system reads the menu item data and applies the menu item data to a frame structure of the menu.

6. The menu generating method for a TV set of Claim 1, wherein in the step b, when the number of corresponding menu items is greater than the number of menu items that can be supported by the frame, then all longitudinal menu items are deleted and remaining menu items are used to fill the longitudinal frame structure if the menu item belongs to the first classification, and all lateral menu items at a same position are deleted and remaining menu items are used to fill the lateral frame structure if the menu item belongs to the second classification.

7. The menu generating method for a TV set of Claim 1, wherein in the step b, a position of the current menu item among menu items of the same classification is indicated by means of an arrow.
